# EUROPÄISCHE PATENTSCHRIFT

(11) **EP 1 972 295 B1**
(45) Veröffentlichungstag und Bekanntmachung des Hinweises auf die Patenterteilung: **04.07.2012**
(21) Anmeldenummer: 07005599.1
(22) Anmeldetag: 19.03.2007
(51) Int. Cl.: A61C 3/025, B24C 7/00

(54) **Pulverbehälter für ein Pulverstrahlgerät**
Powder container for a powder jet device
Conteneur de poudre pour un pulvérisateur de poudre

(43) Veröffentlichungstag der Anmeldung: 24.09.2008
(60) Teilanmeldung: 10154462.5
(73) Patentinhaber: Ferton Holding S.A., 2800 Delemont (CH)
(72) Erfinder: Olmo, Olivier, 1110 Morges (CH); Donnet, Marcel, 01630 Saint Jean de Gonville (FR)
(74) Vertreter: Müller Schupfner & Partner

(56) Entgegenhaltungen:
- EP-A- 1 243 226
- EP-B1- 0 119 735
- WO-A-00/10772
- WO-A-99/20197
- DE-A1- 10 036 557
- US-A- 6 139 554

## Beschreibung

Die vorliegende Erfindung betrifft einen Pulverbehälter zur Vermischung eines Pulvers mit einem unter Druck stehenden Gas nach dem Oberbegriff des Patentanspruches 1.

Pulverstrahlgeräte oder auch dentale Abrasivstrahlgeräte, bei denen ein in einem Behälter bevorratetes Dentalpulver gemeinsam mit einem gasförmigen Trägermedium an eine Düsenanordnung eines über eine Ableitung angeschlossenen Handstücks, in der Regel unter Beimischung von unter Druck stehenden Wassers, angeliefert wird, sind beispielsweise aus der EP 1 243 226 A2 bekannt. Dabei wird ein bevorzugt auswechselbarer Pulverbehälter an einem Pulverstrahlgerät derart befestigt, dass eine in dem Pulverbehälter bevorratete Pulvermenge kontinuierlich in eine Mischkammer übertragen, das Pulver mit dem durch die Mischkammer hindurchgeleiteten Luftstrom vermischt und als Pulver-Luft-Gemisch einem Handstück und einer dort angeordneten Austrittsdüse zur Zahnbehandlung zugeführt wird. Die EP 0 097 288 B1 offenbart ein gattungsgemäßes Pulverstrahlgerät mit einem Pulverbehälter, in den ein unter Druck stehendes Gas eingeführt wird, so dass das dort befindliche Pulver aufgewirbelt und über eine Auslassöffnung als Pulver-Luft-Gemisch abgeführt werden kann. Der Pulverbehälter befindet sich dabei in dem Pulverstrahlgerät und kann von oben jeweils neu mit Pulver gefüllt werden.

Die EP 1 159 929 A2 offenbart ein Pulverstrahlgerät mit einem Pulverbehälter sowie einem zusätzlichen auswechselbaren Fluidbehälter, mit dem beispielsweise entmineralisiertes Wasser als Spülflüssigkeit den Zähnen zugeführt werden kann. Das Pulverstrahlgerät hat dabei prinzipiell die gleiche Ausbildung wie das Gerät gemäß der EP 0 097 288 B1, das heißt der Pulverbehälter ist fest in dem Pulverstrahlgerät eingebaut.

Aus der EP 0 268 948 B1 ist eine Verschlusseinrichtung für einen Fluidbehälter bekannt. Die Verschlusseinrichtung ist für eine Verschraubung des Fluidbehälters mit einem Aufsatzteil ausgebildet, welches außen an dem Pulverstrahlgerät vorgesehen ist. Dadurch kann der Fluidbehälter auswechselbar am Pulverstrahlgerät außen angeordnet werden.

Aus der US 1 664 369 ist bekannt, dass das in einem Pulverbehälter bevorratete Pulver mit Hilfe einer motorisch angetriebenen Förderschnecke dem gasförmigen Trägermedium dosiert beigemischt wird. Die Förderschnecke ist dabei unterhalb einer Auslassöffnung des Pulverbehälters angeordnet. Das Pulver wird mit dem Gas am Ende der Förderschnecke vermischt.

Aus der EP 0 119 735 B2 ist ein Pulverbehälter bekannt, in dessen Mitte eine lang gestreckte Röhre eingebaut ist, die am unteren Ende zwei Einlassöffnungen aufweist, durch die einerseits unter Druck stehendes Gas und andererseits Pulver eintreten kann, das in der Pulverkammer bevorratet ist und die lang gestreckte Röhre umgibt, wobei durch das einströmende Gas das Pulver innerhalb der lang gestreckten Röhre nach oben mitgerissen und mit dem Gas vermischt und am oberen Ende des Pulverbehälters über eine Auslassöffnung abgeführt wird.

Aus der WO 00/10772 ist ein Pulverbehälter bekannt, der einerseits aus einem dem Kanister und andererseits aus einem Abschlussdeckel sowie weiteren Einzelteilen besteht. Kanister und Deckel umgeben eine Pulveraufnahme, die infolge der Verwendung eines Venturirohrs und eines Gaseinlassrohrs auch als Wirbelkammer dienen könnte. Dabei ist der Deckel mit einem Gaseintritt und einem Gemischaustritt versehen. Blindlöcher dienen zum Anschrauben des Pulverbehälters an das Gehäuse des Pulverstrahlgeräts. Jedoch sind eine Luftzuleitung und die Pulver-Gas-Gemischableitungen separat anzuschließen.

Die vorbekannten Pulverbehälter und Düsenanordnungen weisen verschiedene Nachteile auf. Ein in dem Pulverstrahlgerät fest eingebauter Pulverbehälter hat den Nachteil, dass dieser nur zusammen mit dem Gerät selbst gereinigt werden kann und eine aseptische Reinigung des Inneren des Pulverbehälters kaum möglich ist. Darüber hinaus muss der Pulverbehälter stets wieder befüllt werden, das heißt die mit dem Behälter verbundenen Verschlüsse, Dichtungen etc. verschmutzen mit der Zeit, so dass das gesamte Pulverstrahlgerät unbrauchbar wird. Darüber hinaus weisen die bekannten Pulverstrahlgeräte den Nachteil auf, dass diese jeweils nur für eine bestimmte Pulverart und -größe geeignet sind, das heißt, dass bei Verwendung kleinerer oder größerer Korngrößen für das Pulver oder anderer Pulverzusammensetzungen die entsprechenden Zuführ- und Düsenanordnungen ungeeignet werden, so dass entweder zu viel oder zu wenig Pulver zusammen mit dem Gasstrom zugeführt wird. Bei Verwendung feinkörnigen Pulvers mit einer Korngröße von weniger als 100 µm besteht bei der EP 0 119 735 B2 die Gefahr, dass die Luftzufuhrleitung mit Pulver verstopft.

Auch können für ein bestimmtes Pulverstrahlgerät nur ganz bestimmte Pulverbehälter verwendet werden, die exakt auf die Förder- oder Düsenanordnung des Pulverstrahlgeräts abgestimmt sind. Auch die entsprechende Fördermenge des Pulver-Gas-Gemisches kann nur durch eine Druckänderung des zugeführten Gases oder eine Änderung der Zuführung des Pulvers beeinflusst werden, wobei die Pulverzuführung in aller Regel von der Geschwindigkeit des Gases, d. h. dem Gasdruck und der entsprechenden Düsenanordnung abhängig ist.

Der vorliegenden Erfindung liegt die Aufgabe zugrunde, die bekannten Pulverbehälter und damit verbundene Einsätze und Düsenanordnungen derart zu verbessern, dass verschiedene Pulversorten und -größen sowie -gemische hintereinander oder sogar gleichzeitig mit ein und demselben Pulverstrahlgerät verwendet werden können. Darüber hinaus liegt der vorliegenden Erfindung die Aufgabe zugrunde, unterschiedliche Pulverarten unabhängig von einander mit ein und demselben Pulverstrahlgerät anwenden und justieren zu können, das heißt dass verschiedene Pulversorten verwendet und entsprechend eingestellt werden können.

Eine weitere Aufgabe der vorliegenden Erfindung ist es, ein Pulverstrahlgerät anzugeben, das besonders benutzerfreundlich ist und ein schnelles Auswechseln der unterschiedlichen Pulversorten und -größen ermöglicht, ohne dass das Gerät oder die entsprechenden Pulverbehälter aufwändig gereinigt und gesäubert werden müssen. Weiterhin ist es eine Aufgabe der Erfindung, Pulverbehälter anzugeben, die für unterschiedliche Pulversorten und -arten einstellbar sind, in dem der Pulverbehälter einfach und benutzerfreundlich auf das entsprechende Pulver ein- bzw. umstellbar ist, sowie dafür geeignete Einsätze und Düsen. Schließlich ist es eine Aufgabe der vorliegenden Erfindung, mehrere Pulversorten gleichzeitig anwenden zu können, ohne dass der behandelnde Arzt das Handstück oder den Pulverbehälter wechseln oder am Bedienfeld unterschiedliche Einstellungen vornehmen muss.

Die Aufgaben der vorliegenden Erfindung werden durch den unabhängigen Patentanspruch 1 gelöst. Vorteilhafte Ausführungsformen und Ausgestaltungen der Erfindung sind in den Unteransprüchen gekennzeichnet.

Das Pulverstrahlgerät weist mindestens einen erfindungsgemäßen Pulverbehälter mit Zuführungen auf, die das unter Druck stehende Gas dem Pulvervorrat zur Vermischung zuführen, sowie eine Ableitung, die mit einer Austrittsdüse verbunden ist, an der ein Pulver-Gas-Gemisch und ggf. Wasser unter Druck austritt. Die Austrittsdüse ist dabei mit Vorteil an einem Handstück befestigt, mit dem der behandelnde Arzt das Pulver-Gas-Wasser-Gemisch gezielt an die Einsatzstelle richten kann. Das Pulverstrahlgerät der vorliegenden Erfindung weist mindestens einen Aufnahmebereich mit mindestens einem Gemischanschluss und mindestens einem Gasanschluss auf, so dass der Pulverbehälter mit dem Pulverstrahlgerät auswechselbar verbindbar ist, wobei der Pulverbehälter einen bevorzugt genormten Kupplungsbereich aufweist.

Mit Vorteil hat das Pulverstrahlgerät zwei Aufnahmebereiche mit jeweils einem Gemischanschluss und jeweils einem Gasanschluss, an die jeweils unterschiedliche Pulverbehälter mit einem Kupplungsbereich anschließbar sind. Der Kupplungsbereich der Pulverbehälter ist dabei auf den Aufnahmebereich des Pulverstrahlgeräts abgestimmt und vorteilhafterweise genormt. Dadurch lassen sich unterschiedliche Pulverbehälter an jedem der Aufnahmebereiche des Pulverstrahlgeräts anschließen, da jeder Aufnahmebereich einen entsprechenden Gasanschluss zum Zuführen des Gases zum Pulver und einen entsprechenden Gemischanschluss zum Abführen des im Pulverbehälter entwickelten Pulver-Gas-Gemisches aufweist.

Zu diesem Zweck hat der Kupplungsbereich des Pulverbehälters mindestens einen Gaseintritt und mindestens einen Gemischaustritt, die dichtend mit dem Gasanschluss bzw. dem Gemischanschluss des Pulverstrahlgeräts verbindbar sind. Der Kupplungsbereich eines jeden Pulverbehälters weist somit mindestens eine Gaskupplung und eine Gemischkupplung auf, so dass das unter Druck stehende und von dem Pulverstrahlgerät zur Verfügung gestellte Gas in den Pulverbehälter eindringen, sich dort mit dem Pulver vermischen und als Pulver-Gas-Gemisch über die Gemischkupplung wieder dem Pulverstrahlgerät zugeführt werden kann. Von dort kann das Pulver-Gas-Gemisch über die Ableitung bzw. einem geeigneten Schlauch einem Handstück zugeführt werden, wo es an der dort befestigten oder eingearbeiteten Austrittsdüse, bevorzugt zusammen mit einem das Pulver-Gas-Gemisch ringförmig umschließenden Wasserstrahls, austritt.

Der Kupplungsbereich des Pulverbehälters weist nach einer bevorzugten Ausführungsform der Erfindung Nuten bzw. Aufnahmen auf, die in Federn bzw. Zapfen der Aufnahmebereiche des Pulverstrahlgeräts beim Verbinden des Pulverbehälters mit dem Pulverstrahlgerät eingreifen. Dadurch wird eine Führung und Sicherung des Pulverbehälters am Pulverstrahlgerät erzielt. Gleichzeitig dienen die Nuten bzw. Aufnahmen und Federn bzw. Zapfen zum exakten Verbinden des Gaseintritts mit dem Gasanschluss und des Gemischaustritts mjt dem Gemischanschluss. Der Kupplungsbereich des Pulverbehälters weist gemäß Erfindung darüber hinaus Kodiermittel auf, die mit elektrischen Kontakten der Aufnahmebereiche derart zusammenwirken können, dass das Pulverstrahlgerät Informationen über die Art des verwendeten Pulverbehälters erhält. Diese Kodiermittel sind beispielsweise an bestimmten Positionen des Kupplungsbereichs angeordnete Zapfen oder Öffnungen, die in entsprechende Öffnungen bzw. Zapfen am Aufnahmebereich des Pulverstrahlgeräts eingreifen und/oder entsprechende elektrische Kontakte am Pulverstrahlgerät öffnen oder schließen, so dass ein Kontaktmuster im oder am Aufnahmebereich des Pulverstrahlgeräts entsteht, das die entsprechende Information über die Art des Pulverbehälters enthält.

Durch den auf den oder die Aufnahmebereiche des Pulverstrahlgeräts abgestimmten Kupplungsbereich können unterschiedliche Pulverbehälter, das heißt auch unterschiedliche Pulvermischungen und Gemischaufbereitungsmethoden gewählt werden. Je nach Korngröße, Dichte, Gewicht, Zusammensetzung und Art des Pulvers und je nach Verwirbelungsmethode bzw. Düsenanordnung im Pulverbehälter können unterschiedlichste Pulverarten und Pulver-Gas-Gemische für ein und dasselbe Pulverstrahlgerät verwendet bzw. erzeugt werden, ohne dass hierfür der Aufnahmebereich des Pulverstrahlgeräts oder der Kupplungsbereich des Pulverbehälters abgeändert werden müsste. Je nach verwendetem Pulverbehälter wird der Kupplungsbereich mittels der Kodiermittel mit Informationsgebern ausgestattet, um dem Pulverstrahlgerät das zur Verfügung stehende Pulver-Gas Gemisch anzuzeigen. In einem nicht-erfindungsgemäßen Ausführungsbeispiel kann man auf diese Kodiermittel aber auch verzichten und die entsprechende Information auf der Außenseite des Pulverbehälters schriftlich angeben, so dass der Benutzer diese Information dann an einem Bedienfeld des Pulverstrahlgeräts eingibt. Andere Informationsübertragungsmittel wie Chip-Karten, Magnetstreifen oder eine RAM-Auslesevorrichtung sind ebenfalls anwendbar.

Wenn sich mehrere Pulverbehälter am Pulverstrahlgerät in den entsprechenden Aufnahmebereichen befinden, können diese wahlweise derart angesteuert werden, dass das unter Druck stehende Gas in einen der Pulverbehälter über den Gasanschluss und den mit diesem dichtend verbundenen Gaseintritt eintritt, sich dort im Pulverbehälter mit dem Pulver vermischt und als Pulver-Gas-Gemisch über den Gemischaustritt und den mit diesem dichtend verbundenen Gemischanschluss in die Ableitung eintritt, die mit einer Austrittsdüse verbunden ist. Das unter Druck stehende Gas wird dabei mit Vorteil über einen Gaseinlass und unter Druck stehendes Wasser kann über einen entsprechenden Wassereinlass dem Pulverstrahlgerät zugeführt werden, wobei das Gas wahlweise einem der auswechselbar angeordneten Pulverbehälter und das Wasser direkt oder über eine einstellbare Drossel der Ableitung zugeführt wird.

Ein erfindungsgemäßer Pulverbehälter nach der vorliegenden Erfindung für ein Pulverstrahlgerät weist eine Pulveraufnahme, einen Gaseintritt, einen Gemischaustritt und eine Wirbelkammer auf, in der unter Druck stehendes Gas Pulver verwirbelt und als Pulver-Gas-Gemisch über eine Auslassöffnung abgeführt wird, wobei der Pulverbehälter einen Kupplungsbereich zum dichtenden Verbinden des sich im Kupplungsbereich angeordneten Gaseintritts und des sich im Kupplungsbereich angeordneten Gemischaustritts mit entsprechenden Anschlüssen eines Pulverstrahlgeräts aufweist.

Mit Vorteil hat die Pulveraufnahme unterschiedliche Düsen-/Leitungshalterungen und unterschiedliche Einsätze, so dass abhängig von dem verwendeten Pulver unterschiedliche Düsen- und Verwirbelungsanordnungen im Pulverbehälter realisierbar sind. Bevorzugt ist die Pulveraufnahme im Pulverbehälter auswechselbar angeordnet und dort in einem Gehäuse dichtend mit dem Kupplungsbereich verbunden. Die Düsen-/Leitungshalterungen sind im Kupplungsbereich bevorzugt lösbar angeordnet und mit der Pulveraufnahme derart verbunden, dass das unter Druck stehende Gas in die Pulveraufnahme eintreten und dort das Pulver verwirbeln kann. Mit Vorteil ist die Pulveraufnahme als Einwegartikel ausgestaltet und mit einer abziehbaren Abdeckfolie versiegelt, die nach dem Einsetzen der Pulveraufnahme in den Pulverbehälter abgezogen wird, so dass die Pulveraufnahme betriebsbereit ist. Nach einer anderen bevorzugten Ausführungsform der Erfindung ist aber auch der gesamte Pulverbehälter als Einwegartikel ausgebildet und kann nach dem Entleeren des Pulvers entsorgt werden, so dass ein aufwändiges Reinigen und Sterilisieren des Pulverbehälters überflüssig wird.

Nach einer ersten bevorzugten Ausführungsform des Pulverbehälters weist die Pulveraufnahme eine eine Düse haltende Düsenhalterung und einen Einsatz auf, der mit einer Einblasöffnung derart die Düse aufnimmt, dass das unter Druck stehende Gas über den Gaseintritt der Düse in die Einblasöffnung zugeführt wird, wobei die in der Einblasöffnung des Einsatzes im Wesentliches vertikal nach oben gerichtete Düse das Gas in eine zylindrisch oder konisch zulaufende Mischkammer des Einsatzes einströmen lässt, so dass Pulver, das sich in der Pulveraufnahme um den Einsatz herum befindet und zwischen der Düse und der Wand der Mischkammer an der Einblasöffnung ansteht, durch das Gas vertikal nach oben mitgerissen, in der Mischkammer mit dem Gas vermischt und in der Wirbelkammer verwirbelt wird. Die Verwirbelung des Pulvers erfolgt dabei teilweise bereits in der Mischkammer, im Wesentlichen aber in der sich an die Mischkammer und oberhalb des Einsatzes befindlichen Wirbelkammer, wo sich dann auch die Auslassöffnung zum Abführen des Pulver-Gas-Gemisches befindet.

Nach einer zweiten bevorzugten Ausführungsform des erfindungsgemäßen Pulverbehälters weist die Pulveraufnahme eine eine Gasleitung haltende Leitungshalterung auf, so dass das unter Druck stehende Gas über den Gaseintritt in die Gasleitung einströmt und von dieser durch den Pulvervorrat oder am Pulvervorrat vorbei in den oberen Bereich der Pulveraufnahme geführt und derart einer sich am Ende der Gasleitung angeordneten Düse zugeführt wird, dass das aus der Düse austretende Gas das Pulver in der Wirbelkammer verwirbelt, wobei sich die Düse oberhalb des Pulverspiegels des sich in der Pulveraufnahme befindlichen Pulvers befindet und in Richtung des Pulvers ausgerichtet ist, um dieses entsprechend aufzuwirbeln.

Die Pulveraufnahme ist mit Vorteil in einem Gehäuse angeordnet und mit einem Deckel abgeschlossen, der sich an der dem Kupplungsbereich gegenüberliegenden Seite des Pulverbehälters befindet. Bevorzugt befindet sich die Pulveraufnahme in einem aufrecht stehenden, zylinderförmigen Gehäuse und ist dort auswechselbar, insbesondere als Einwegartikel angeordnet. Die unterschiedlichen Düsen-/Leitungshalterungen befinden sich am unteren und der Deckel am oberen Ende des Gehäuses wobei der Deckel und/oder die Pulveraufnahme mittels eines Verschlussteils dichtend im Gehäuse festlegbar sind.

Die unterschiedlichen Düsen-/Leitungshalterungen sind bevorzugt mittels einer bevorzugt abnehmbaren und dichtend anlegbaren Verschlusskappe an einem Bodenteil des Gehäuses im Kupplungsbereich auswechselbar befestigt. Der Kupplungsbereich des Pulverbehälters hat bevorzugt Kodiermittel in Form von Zapfen und/oder Öffnungen, die Informationen über die Art des Pulverbehälters beinhalten. Die Auslassöffnung zum Abführen des Pulver-Gas-Gemisches befindet sich bevorzugt am oberen Ende des Gehäuses, im Bereich des Deckels, wobei der Deckel Führungsformungen aufweist, die das Pulver-Gas-Gemisch ablenken. Durch das Auswechseln des Deckels und durch den Einsatz eines anderen Deckels mit anderen Führungsformungen, die das Pulver-Gas-Gemisch in andere Richtungen innerhalb der Wirbelkammer bezogen auf die Auslassöffnung ablenken können, kann der Pulver-Gas-Strom bezüglich der Auslassöffnung mehr oder weniger beeinflusst werden. Dadurch wird eine einfache Reguliermethode erzielt, ohne dass hierfür das Pulverstrahlgerät oder der Pulverbehälter abgewandelt werden müsste.

Bevorzugt ist das Gehäuse des Pulverbehälters zumindest teilweise transparent, damit der behandelnde Arzt über den Füllstand in der Pulveraufnahme informiert ist.

Nach einer weiteren bevorzugten Ausführungsform der Erfindung weist der Kupplungsbereich Arretiermittel auf, die mit entsprechenden Gegenmitteln am Pulverstrahlgerät den Pulverbehälter festlegen, so dass der Nutzer mit Sicherheit davon ausgehen kann, dass die Gas- und Gemischkupplungen sicher und dichtend miteinander verbunden sind.

Ein erfindungsgemäßer Einsatz für einen Pulverbehälter nach der vorliegenden Erfindung weist Segmente auf, die unterschiedlich große Regulieröffnungen bilden, die wahlweise vor der Auslassöffnung angeordnet werden können, um so den Ausstoß an Pulver-Gas-Gemisch zu regulieren. Die Segmente bilden bevorzugt Kreisabschnitte und sind mittels Stützstege an der zylindrisch oder konisch zulaufenden Mischkammer befestigt. Der Einsatz hat im Wesentlichen die Form eines länglichen, hohlen Doms, an dessen unterem Ende die Einblasöffnung angeordnet ist, in die die Düse zum Einblasen des Gases hineinragt, während am anderen Ende die kreisförmigen Segmente mittels Stützstege derart von der Mischkammer beabstandet angeordnet sind, dass sie am oberen Außenrand der Pulveraufnahme anliegen und die Auslassöffnung im verdrehten Zustand abdecken oder im Bereich der Regulieröffnungen freigeben. Zwischen den kreisförmigen Segmenten sind Regulieröffnungen vorgesehen, die unterschiedlich groß sind, so dass beim Drehen des Einsatzes in der Pulveraufnahme unterschiedlich große Regulieröffnungen vor der Auslassöffnung platziert werden können, so dass sich auch hierdurch eine Regulierung des Pulver-Gas-Gemisches einstellen lässt. Mit Vorteil greifen die Stützstege in Drehbegrenzungen der Pulveraufnahme ein, um eine vorbestimmbare Regulieröffnung exakt vor der entsprechenden Auslassöffnung anordnen zu können.

Die Einblasöffnung am unteren Ende des dornförmigen Einsatzes unterscheidet sich von der Einblasöffnung der dornförmigen Mischkammer der US 4 487 582, in dem hier die Düse bis in den dornförmigen Einsatz hineinragt und zwischen der Düse und der Einblasöffnung ein Ringspalt entsteht, der - abhängig von der verwendeten Korngröße des Pulvers - unterschiedlich groß bemessen sein muss. Durch den Ringspalt kann Pulver nicht in die Mischkammer vordringen sondern wird erst bei dem Einblasen des unter Druck stehenden Gases von diesem mitgerissen und verwirbelt. Durch diese Anordnung der erfindungsgemäßen Düse wird eine Verstopfung der Düse durch Nachrieseln des Pulvers vermieden, da der Ringspalt zwischen Düse und Einblasöffnung des dornförmigen Einsatzes ein Nachrücken des Pulvers bei abgeschaltetem Gas verhindert.

Die zylindrisch oder konisch zulaufende Mischkammer des Einsatzes ist in ihrer Länge, ihrem Durchmesser, ihrer Durchmesseränderung in Strömungsrichtung und ihrem Abstand zur Düse dem jeweils verwendeten Pulver anpassbar, so dass durch ein Auswechseln des Einsatzes die Pulveraufnahme in ihrer Verwirbelungswirkung und in ihrer Fähigkeit, bestimmte Pulver zuverlässig und gleichmäßig zu verwirbeln, abgestimmt werden kann.

Ein Verfahren zur Zahnbehandlung nutzt ein Pulverstrahlgerät, in dem ein unter Druck stehendes Gas mit einem Pulver vermischt wird, in dem das Gas über Zuführungen einem Pulverbehälter zugeführt und dort mit dem Pulver vermischt wird, wobei das Gas-Pulver-Gemisch über eine Ableitung einer Austrittsdüse zugeführt wird, die sich bevorzugt an einem Handgerät befindet. Der Pulverbehälter, der einen Kupplungsbereich mit einem Gaseintritt und einem Gemischaustritt aufweist, wird mit dem Pulverstrahlgerät, das mindestens einen Aufnahmebereich mit mindestens einem Gemischanschluss und mindestens einem Gasanschluss aufweist, verbunden, in dem der Gaseintritt dichtend mit dem Gasanschluss und der Gemischaustritt dichtend mit dem Gemischanschluss verbunden wird.

Bei diesem Verfahren werden bevorzugt zwei unterschiedliche Pulverbehälter mit dem Pulverstrahlgerät verbunden, wobei ein erster Pulverbehälter ein erstes Pulver mit einer ersten geeigneten Düsenanordnung und ein zweiter Pulverbehälter ein zweites Pulver mit einer zweiten geeigneten Düsenanordnung aufweist, wobei beide Pulverbehälter gleichartige Kupplungsbereiche zum Verbinden mit dem Pulverstrahlgerät aufweisen und wobei das unter Druck stehende Gas wahlweise dem einen oder dem anderen Pulverbehälter zugeführt werden kann.

Eine bevorzugte Verwendung des Pulverstrahlgeräts oder des Verfahrens liegt in der Verwendung beim abrasiven Reinigen von Zähnen. Während sich für feinkörnige Pulver Düsenanordnungen eignen, die das Pulver direkt mit dem Gas beaufschlagen, so hat man festgestellt, das grobkömigere Pulver besser mit einer Düsenanordnung verwirbelt werden können, die in einer Einblasöffnung eines Einsatzes angeordnet sind, so dass das Pulver durch das an der Einblasöffnung vorbeiströmende Gas mitgerissen und verwirbelt wird.

Als bevorzugtes Gas wird Luft verwendet, dieses wird dem Pulverstrahlgerät bevorzugt über einen Druckluftanschluss zugeführt, jedoch ist es auch denkbar, dass das Pulverstrahlgerät selbst einen Kompressor beinhaltet und die Druckluft selbst herstellt. Die Pulverbehälter sind darüber hinaus dichtend abgeschlossen, so dass ein Auslaufen des Pulvers, ebenso wie ein Eindringen von Schmutz und Feuchtigkeit verhindert wird. Hierzu befinden sich bevorzugt zwischen der Pulveraufnahme und dem Kupplungsbereich sowie zwischen der Düsen/Leitungshalterung und der Verschlusskappe bzw. zwischen dieser und dem Bodenteil entsprechende Dichtungen, bevorzugt aus Gummi. Durch die Auswechselbarkeit der Pulverbehälter können unterschiedliche Pulversorten bereitgestellt und unterschiedliche Pulver-Gas- bzw. Pulver-Luftgemische aufbereitet und eingesetzt werden.

Einige bevorzugte Ausführungsbeispiele der vorliegenden Erfindung werden anhand der beigefügten Zeichnungen näher erläutert. Dabei zeigen:
- Figur 1: die schematische, dreidimensionale Ansicht auf ein Pulverstrahlgerät mit zwei aufgesetzten, erfindungsgemäßen Pulverbehältern;
- Figur 2: den Querschnitt durch eine erste bevorzugte Ausführungsform eines erfindungsgemäßen Pulverbehälters;
- Figur 3: den Querschnitt durch eine zweite bevorzugte Ausführungsform ei- nes erfindungsgemäßen Pulverbehälters;
- Figur 4: die dreidimensionale Aufsicht auf die erste bevorzugte Ausführungs- form eines erfindungsgemäßen Pulverbehälters nach Figur 2;
- Figur 5: die dreidimensionale Ansicht von schräg unten auf einen erfindungs- gemäßen Pulverbehälter;
- Figur 6: den Teilquerschnitt durch den unteren Teil des erfindungsgemäßen Pulverbehälters nach einer ersten Ausführungsform nach Figur 2 mit Kupplungsbereich sowie den Querschnitt durch den oberen Bereich des Pulverstrahlbehälters mit Aufnahmebereich;
- Figur 7: den Querschnitt durch eine bevorzugte Ausführungsform des De- ckels des erfindungsgemäßen Pulverbehälters;
- Figur 8: die dreidimensionale Ansicht eines Einsatzes für die erste bevorzug- te Ausführungsform des erfindungsgemäßen Pulverbehälters nach Figur 2;
- Figur 9: die dreidimensionale Vorderansicht auf ein Pulverstrahlgerät ohne aufgesetzte Pulverbehälter mit zwei Aufnahmebereichen; und
- Figur 10: die dreidimensionale Rückansicht des Pulverstrahlgeräts mit zwei Aufnahmebereichen aber ohne Pulverbehälter.

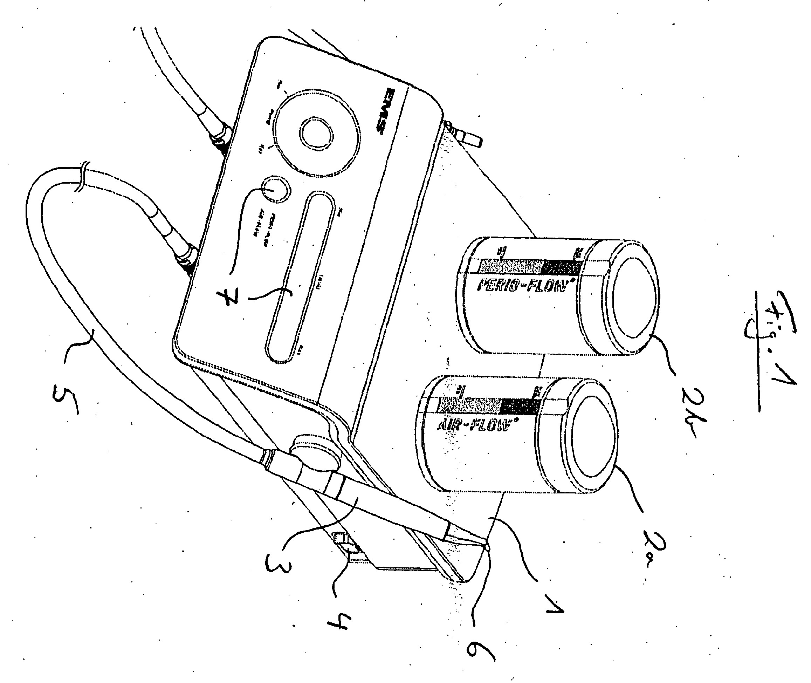

Figur 1 zeigt die dreidimensionale Vorderansicht eines Pulverstrahlgeräts 1 mit einem ersten Pulverbehälter 2a und einem zweiten Pulverbehälter 2b, die auf der Oberseite des Pulverstrahlgeräts 1 aufgesetzt sind. Das Pulverstrahlgerät 1 hat ein Bedienfeld 7 zum Einstellen der Stärke des Pulver-Gas-Gemisches, der Stärke des Wasserstrahls und zur Auswahl des verwendeten Pulverbehälters 2a, 2b. Am Pulverstrahlgerät 1 befestigt ist eine Ableitung 5, die in ein Handstück 3 mündet, an dem eine Austrittsdüse 6 befestigt ist, an der das Pulver-Gas-Gemisch und das Wasser austritt. Ein Schalter 4 dient zum Ein- und Ausschalten des Pulverstrahlgeräts 1.

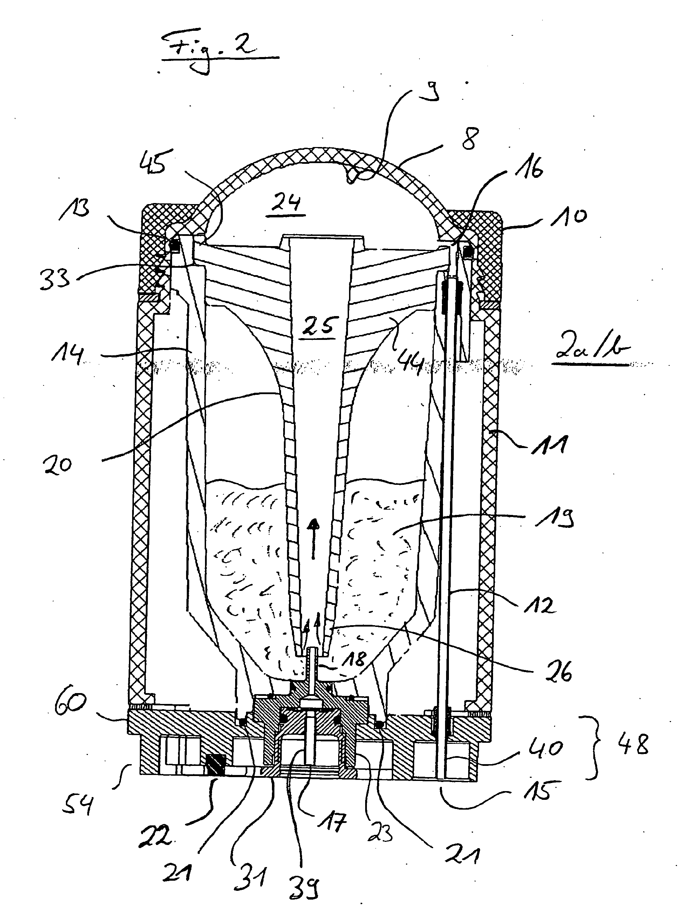

Figur 2 zeigt eine erste bevorzugte Ausführungsform des Pulverbehälters 2 mit einem Gehäuse 11, in dem eine Pulveraufnahme 14 abgedichtet eingesetzt befestigt ist. Die Pulveraufnahme 14 steht im Wesentlichen aufrecht in einem bevorzugt zylindrisch ausgeformten Gehäuse 11, und ist mittels eines Verschlussteils 10 am oberen Ende des Gehäuses 11 ggf. zusammen mit einem Deckel 8, dichtend befestigt. Am unteren Teil des Gehäuses 11 befindet sich ein Bodenteil 60, an dem die Pulveraufnahme 14 dichtend befestigt ist.

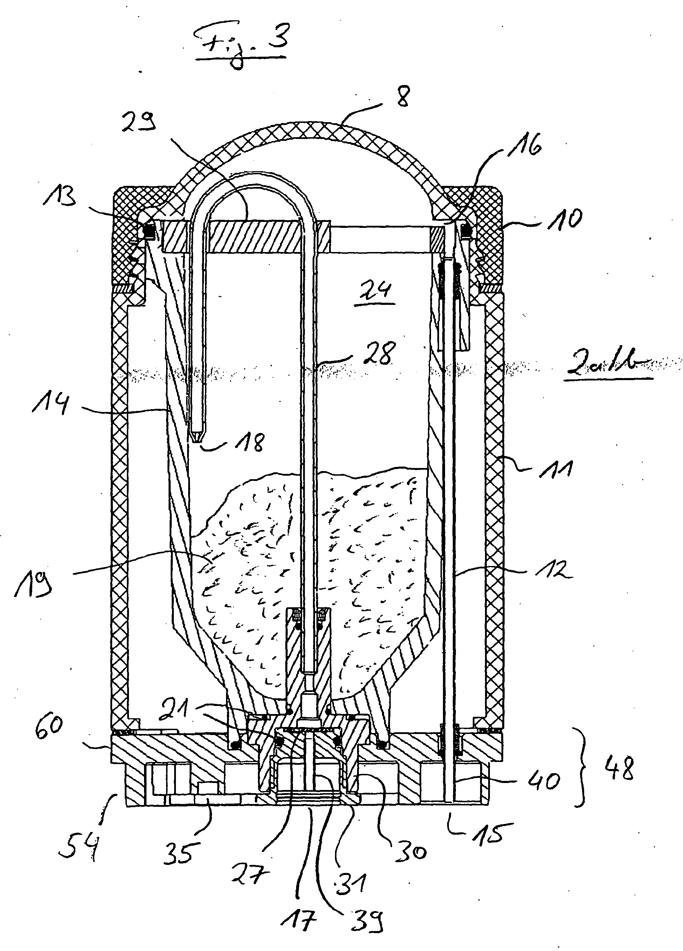

In der Pulveraufnahme 14 befindet sich ein Einsatz 20, der eine zylindrische oder im Wesentlichen konisch zulaufende, längliche Mischkammer 25 bildet und im oberen, dem Deckel 8 zugewandten Bereich des Gehäuses 11 Stützstege 44 aufweist, die Segmente 45 stützen. Der Einsatz 20 hat am unteren, dem Bodenteil 60 zugewandten Ende eine Einblasöffnung 26, in die eine Düse 18 mündet, die mittels einer Düsenhalterung 23 am Gehäuse 11 bzw. am Bodenteil 60 dichtend befestigt ist. Zum Auswechseln der Düse 18 ist die Düsenhalterung 23 bevorzugt mittels einer Verschlusskappe 31 auswechselbar angeordnet. Die Verschlusskappe 31 ist gegenüber der Düsenhalterung 23 dichtend am Bodenteil 60 befestigt, wobei die Düse 18 mit einem Gasstutzen 39 verbunden ist, der einen Gaseintritt 17 bildet und als Kupplung zum Ankoppeln an einen Gasanschluss des Pulverstrahlgeräts 1 dient. Damit das Gas zuverlässig über den Gasstutzen 39 in die Düse 18 eintreten kann, ist die Verschlusskappe 31 auch mittels einer Membrandichtung 27 (vgl. Fig. 3) gegenüber der Düsenhalterung 23 abgedichtet.

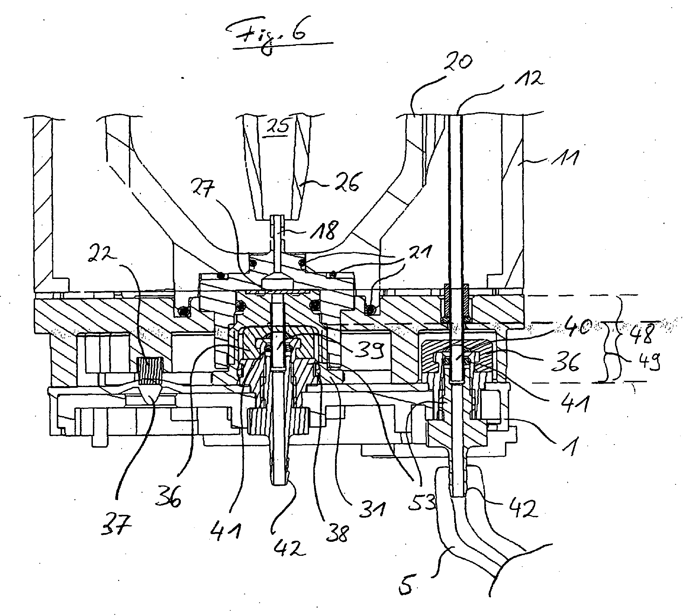

Das Bodenteil 60 definiert in dem hier gezeigten, bevorzugten Ausführungsbeispiel auch den Kupplungsbereich 48 des Pulverbehälters 2, der neben der Düsenhalterung 23 mit Verschlusskappe 31 und Gasstutzen 39 auch einen Gemischaustritt 15 mit einem Gemischstutzen 40 aufweist, der bevorzugt kontinuierlich in eine Gemischleitung 12 mündet, die am oberen Ende der Pulveraufnahme 14 mit einer Auslassöffnung 16 verbunden ist, so dass das Pulver-Gas-Gemisch über die Auslassöffnung 16 entlang der Gemischleitung 12 am Gemischaustritt 15 austreten kann. Die Gemischleitung 12 ist ebenfalls gegenüber dem Bodenteil 60 abgedichtet. Schließlich weist der Kupplungsbereich 48 bevorzugt Zapfen 22 auf, die mit elektrischen Kontakten 37 (vgl. Figur 6) derart in Eingriff kommen, dass das Pulverstrahlgerät 1 Informationen über die Art des Pulverbehälters 2 erhält.

Die Pulveraufnahme 14 hat eine gewisse Menge an Pulver 19 bevorratet, das um den Einsatz 20 herum in der Pulveraufnahme 14 bis zu einer bestimmten Füllhöhe eingefüllt wird und an der Einblasöffnung 26 im Bereich der Düse 18 ansteht. Das Pulver 19 füllt im Ruhezustand die Mischkammer 25 aufgrund der inhärenten Eigenschaften des Pulvers nicht auf, da dieses sich im Ringspalt zwischen der Wandung der Einblassöffnung 26 des Einsatzes 20 und der Düse 18 ineinander verhakt und dort eine Grenzschicht bildet.

Sobald unter Druck stehendes Gas aus der Düse 18 austritt, entsteht an dem Ringspalt zwischen Düse 18 und Kammerwand der Mischkammer 25 ein Unterdruck, der das dort anstehende Pulver mit nach oben reißt (vgl. angedeutete Pfeile), so dass das Gas sich mit dem Pulver in der Mischkammer 25 vermischt und dort zum Teil auch verwirbelt wird, bis es aus dem Einsatz 20 nach oben austritt und in die Wirbelkammer 24 eintritt. In der Wirbelkammer 24 wird das Gas-Pulver-Gemisch verwirbelt und zum Teil über die Auslassöffnung 16 abgeführt, zum Teil wieder in die Pulveraufnahme 14 zurückgeführt.

Der Deckel 8 weist bevorzugt Führungsformungen 9 auf, die die Wirbelrichtung und die Menge an Pulver-Gas-Gemisch, die die Auslassöffnung 16 erreicht, reguliert.

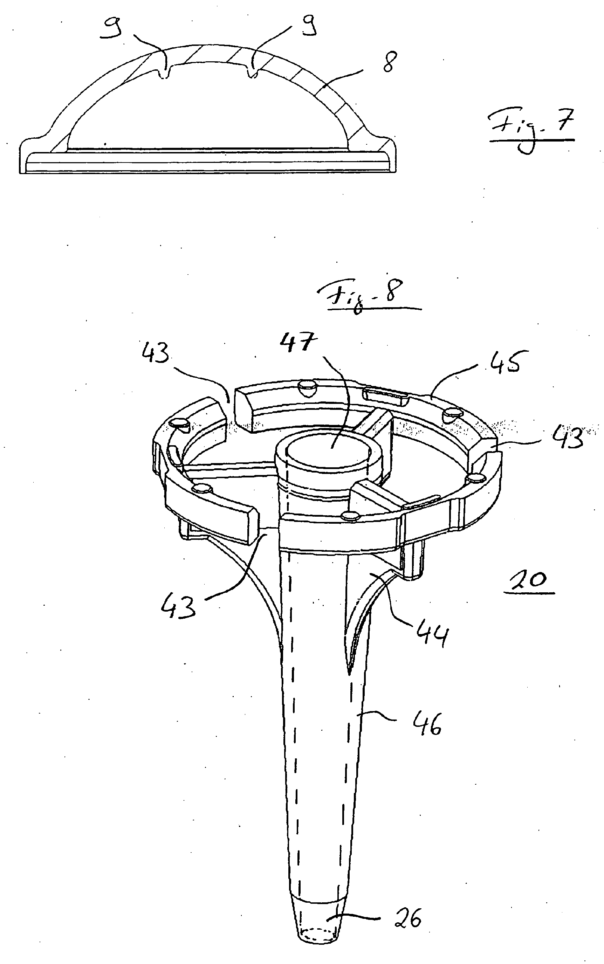

Der Einsatz 20 kann in verschiedene Positionen in der Pulveraufnahme eingeführt werden, wobei die Pulveraufnahme 14 Drehbegrenzungen 33 aufweist, in die die entsprechenden Stützstege 44 und/oder Segmente 45 eingreifen, so dass spezielle Regulieröffnungen 43 (vgl. Figur 8) an der Auslassöffnung 16 anliegen und dort eine bestimmte Öffnungsweite für das Pulver-Gas-Gemisch bilden.

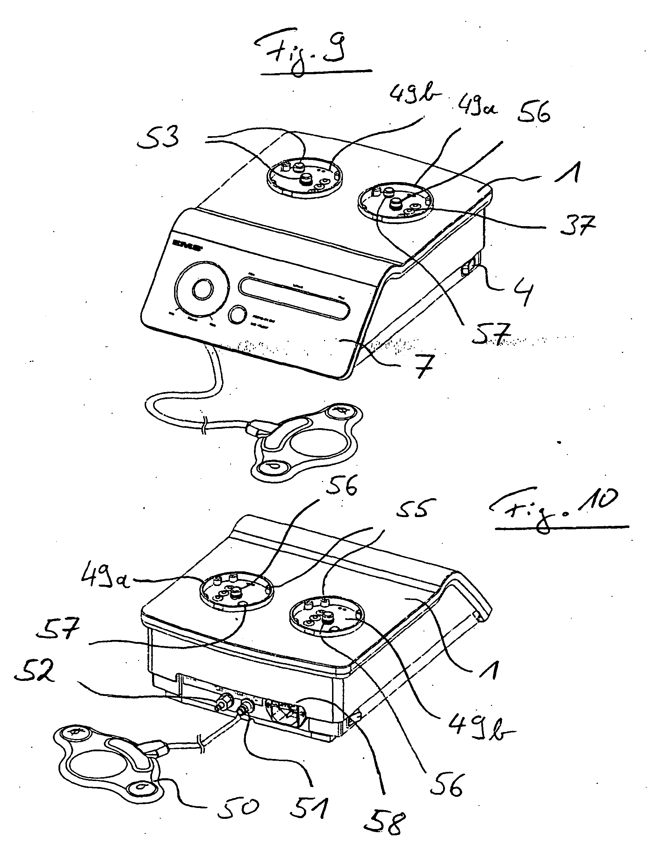

Das Bodenteil 60 weist bevorzugt Nuten 54 auf, die in entsprechende Federn 55 (vgl. Figuren 9/10) eingreifen. Dadurch wird eine exakte Positionierung des Pulverbehälters 2 am Pulverstrahlgerät 1 gewährleistet. Im Übrigen sind die Verbindungen Pulveraufnahme 14 zu Bodenteil 60 über Behälterdichtungen 21, bevorzugt O-Ringe, abgedichtet.

Figur 3 zeigt eine zweite bevorzugte Ausführungsform eines Pulverbehälters 2 nach der vorliegenden Erfindung. Gleiche Teile sind mit gleichen Bezugszeichen versehen, so dass hier auf die Beschreibung zu Figur 2 verwiesen werden kann. Statt einer Düsenhalterung 23 befindet sich in diesem Ausführungsbeispiel im Bodenteil 60 dichtend befestigt eine Leitungshalterung 30, die eine Gasleitung 28 trägt, die sich im Inneren der Pulveraufnahme 14 nach oben hin zu einer Kulisse 29 erstreckt, dort eine 180°-Schleife beschreibt und am Rand der Pulveraufnahme 14 wieder nach unten in Richtung des Pulvers gerichtet ist, so dass eine sich am Ende der Gasleitung 28 befindliche Düse 18 auf das Pulver 19 gerichtet wird. Die Leitungshalterung 30 ist ebenso wie beim Ausführungsbeispiel nach Figur 2 mittels einer Verschlusskappe 31 dichtend am Gehäuse 11 bevorzugt auswechselbar befestigt und mit entsprechenden Gehäusedichtungen 21 gegenüber der Pulveraufnahme 14 und der Verschlusskappe 31 abgedichtet. Statt einem Zapfen 22 befindet sich im Kupplungsbereich 48 eine Öffnung 35, die dem Pulverstrahlgerät 1 eine andere Kodierung übermittelt als die erste Ausführungsform nach Figur 2. Dadurch erhält das Pulverstrahlgerät 1 die Information, dass hier ein Pulverbehälter 2 mit Gasleitung 28, nicht aber mit Einsatz 20 aufgesteckt ist.

Das durch den Gaseintritt 17 einströmende Gas, bevorzugt Druckluft, läuft durch die Membrandichtung 27 in die Gasleitung 28 und wird über die Düse 18 auf das Pulver gerichtet. Das bevorzugt feinkörnige, fein vermengte Pulver 19 wird in der Wirbelkammer 24 verwirbelt, wobei die Wirbelkammer 24 durch die Pulveraufnahme 14 und den oberen Bereich des Gehäuses 11 unterhalb des Deckels 8 gebildet wird. Das aufgewirbelte Pulver verlässt die Wirbelkammer 24 über die Auslassöffnung 16 und wird mittels der Gemischleitung 12 und dem Gemischstutzen 40 am Gemischaustritt 15 abgeführt.

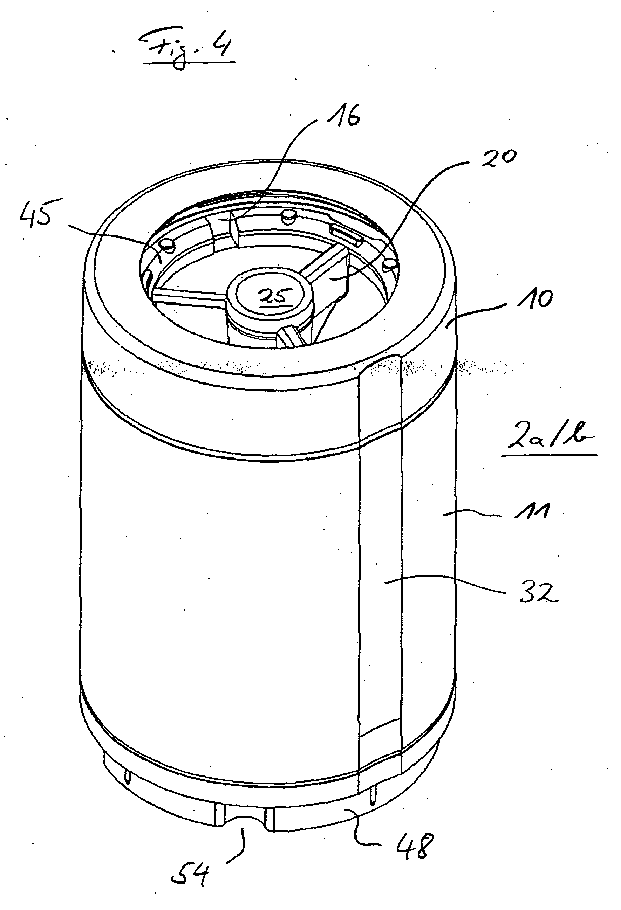

Figur 4 zeigt die dreidimensionale Aufsicht auf die erste bevorzugte Ausführungsform des erfindungsgemäßen Pulverbehälters 2 mit Einsatz 20, wobei das Gehäuse 11 ein transparentes Sichtfenster 32 aufweist, an dem der Füllstand des Pulvervorrates abgelesen werden kann. Wahlweise kann das Gehäuse 11 aber auch vollständig aus transparentem Material, wie Kunststoff oder Glas, ausgebildet sein.

Am unteren Ende am Kupplungsbereich 48 befinden sich Nuten 54 zum drehfesten Aufstecken auf den Aufnahmebereich 49 des Pulverstrahlgeräts 1. Figur 4 zeigt den oberen Bereich des Gehäuses 11 mit Verschlussteil 10, aber abgenommenem Deckel 8, wodurch die Segmente 45 des Einsatzes 20 erkennbar sind, die Regulieröffnungen 43 bilden, hinter denen sich eine einzelne rohrförmige Auslassöffnung 16 oder wahlweise eine ringförmige Auslassöffnung 16 befindet, die Pulver über alle vorhandenen Regulieröffnungen 43 abführt und an einer Seite des Pulverbehälters 2 über die Gemischleitung 12 ableitet.

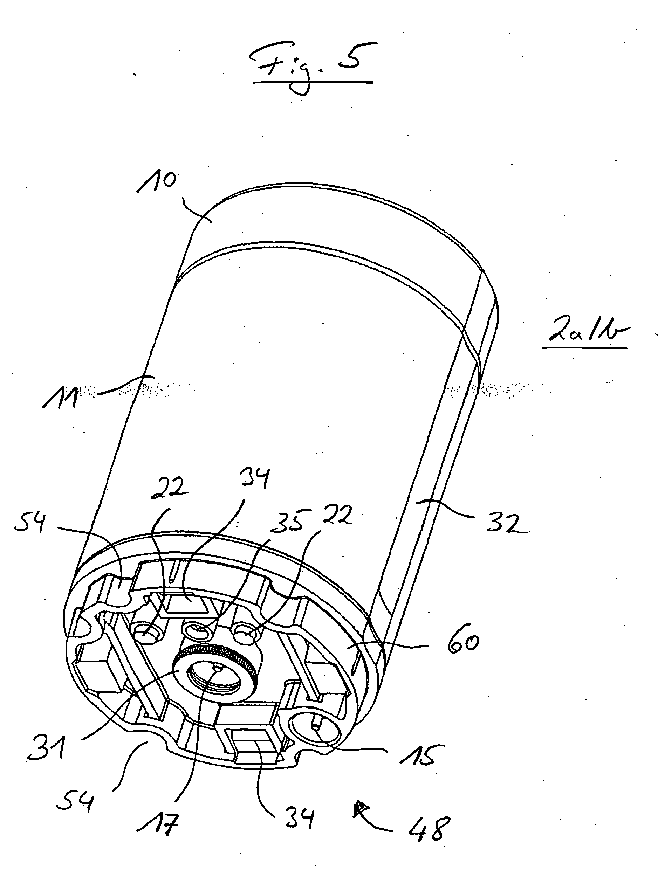

Figur 5 zeigt die dreidimensionale untere Ansicht eines erfindungsgemäßen Pulverbehälters 2 mit oberem Verschlussteil 10 und Sichtfenster 32. Der untere Bereich des Gehäuses 11 bildet den Kupplungsbereich 48, der bevorzugt aus einem Bodenteil 60 besteht, das kreisringförmig um den Umfang des bevorzugt zylindrischen Gehäuses 11 mit leicht verringertem Durchmesser um den Pulverbehälter 2 herumläuft, wobei kreissegmentartige Nuten 54 zum Aufsetzen auf das Pulverstrahlgerät 1 vorgesehen sind.

Erkennbar sind Zapfen 22 bzw. Öffnungen 35, die für die Kodierung des Pulverbehälters 2 dienen. Darüber hinaus können Aufnahmen 34 vorgesehen sein, in die entsprechende Zapfen des Aufnahmebereichs des Pulverstrahlgeräts 1 eingreifen, um den Pulverbehälter 2 weiter zu sichern.

Der Gaseintritt 17 ist innerhalb der Verschlusskappe 31 erkennbar, die bevorzugt schraubförmig eingesetzt ist und die Düsenhalterung 23 bzw. die Leitungshalterung 30 befestigt.

Figur 6 zeigt den Querschnitt durch den unteren Bereich des Pulverbehälters 2 nach einer ersten bevorzugten Ausführungsform nach Figur 2 sowie den Querschnitt durch den oberen Bereich des Pulverstrahlgeräts 1, d.h. durch den Aufnahmebereich 49, der zum Großteil mit dem Kupplungsbereich 48 des Pulverbehälters 2 koinzidiert.

Das Pulverstrahlgerät 1 weist Steckansätze 42 auf, die an entsprechende Druckluftleitungen bzw. Gemischleitungen angeschlossen werden können. Über einen ersten Steckansatz 42 wird Druckluft dem Gasstutzen 39 zugeführt, der das Gas über die Membrandichtung 27 der Düse 18 zuführt. Beim Einsetzen des Pulverbehälters 2 in den Aufnahmebereich 49 des Pulverstrahlgeräts 1 durchstößt der Gasstutzen 39 eine perforierte Dichtkappe 36, die bevorzugt aus Gummi besteht, wodurch eine erste Dichtwirkung erzielt wird. Darüber hinaus befindet sich unterhalb der Dichtkappe 36 eine Verbindungsdichtung 41, bevorzugt ein O-Ring aus Gummi, der den Gasstutzen 39 zuverlässig gegenüber der Dichtkappe 36 und der Außenwelt abdichtet.

Ebenso wird auch der Gemischstutzen 40 durch eine perforierte Dichtkappe 36 hindurch gesteckt und dort mittels einer Verbindungsdichtung 41 gegenüber der Außenwelt abgedichtet. Das Gemisch läuft durch die Gemischleitung 12 und den Gemischstutzen 40 in den Steckansatz 42 und kann dort von der Ableitung 5 aufgenommen werden.

Des Weiteren ist ein Zapfen 22 erkennbar, der gegen einen elektrischen Kontakt 37 drückt und somit die Information an das Pulverstrahlgerät 1 weitergibt, welcher Pulverbehälter 2 momentan auf dem Pulverstrahlgerät 1 bzw. auf dem ausgewählten Aufnahmebereich 49 aufgesteckt ist.

Figur 7 zeigt den Querschnitt durch einen bevorzugten Deckel 8 mit Führungsformungen 9. Diese können an unterschiedlichen Stellen derart angeordnet sein, dass das in der Wirbelkammer 24 entwickelte Pulver-Gas-Gemisch mehr oder weniger in Richtung der Auslassöffnung 16 abgelenkt wird. So können einem Pulverstrahlgerät 1 bzw. einem Pulverbehälter 2 unterschiedliche Deckel 8 beigefügt werden, so dass der Arzt schnell das Verschlussteil 10 abschrauben und den Deckel 8 auswechseln kann, um eine andere Gemischcharakteristik zu erreichen.

Figur 8 zeigt die dreidimensionale Ansicht auf einen Einsatz 20 mit Steigleitung 46, die im Wesentlichen zylinderförmig bzw. leicht konisch zulaufend ausgebildet ist und am unteren Bereich eine Einblasöffnung 26 ausformt, in die die Düse 18 leicht hineinragt. Am oberen, der Einblasöffnung 26 abgewandten Seite der Steigleitung 46 befinden sich Segmente 45, die kreisringförmig um den oberen Auslass 47 der Steigleitung 46 angeordnet und mittels Stützstegen 44 an der Steigleitung 46 angebracht sind. Durch unterschiedlich lange bzw. ausgedehnte Segmente 45 entstehen unterschiedlich große Regulieröffnungen 43, die dann durch Drehen des Einsatzes 20 gegenüber einer Auslassöffnung 16 angeordnet werden können. Durch Entnahme des Einsatzes 20, Verdrehen und Wiedereinsetzen lässt sich somit, ggf. unter Auswechslung des Deckels 8 mit anderen Führungsformungen 9, eine völlig andere Pulver-Gas-Gemischzusammensetzung erreichen, ohne dass hierfür der Pulverbehälter 2 ausgewechselt oder abgeändert werden muss.

Wahlweise kann man am oberen Bereich des Gehäuses 11 aber auch eine ringförmige, geschlitzte Auslassöffnung 16 vorsehen, so dass das Pulver-Gas-Gemisch durch alle Regulieröffnungen 43 nach außen austreten kann, wobei hier ebenfalls wieder unterschiedlich große Regulieröffnungen 43 für die Menge an Pulver-Gas-Gemisch verantwortlich sind. In diesem Fall ist die Gemischcharakteristik durch ein Auswechseln des Einsatzes 20 mit unterschiedlich großen Regulieröffnungen 43 möglich.

Figuren 9 und 10 zeigen das Pulverstrahlgerät 1 von schräg vorne bzw. schräg hinten, wobei im oberen Bereich des Gehäuses zwei Aufnahmebereiche 49 angezeigt sind, wobei ein erster Aufnahmebereich 49a einen Gasanschluss 56 und einen Gemischanschluss 57 aufweist, das heißt Anschlüsse 53, an die entsprechende Kupplungsteile der Pulverbehälter 2 angeschlossen werden können. Der Aufnahmebereich 49a, 49b weist darüber hinaus bevorzugt Kontakte 37 auf, die mit entsprechenden Zapfen 22 bzw. Öffnungen 35 koinzidieren, um die Kodiermittel des Pulverbehälters 2 zu detektieren. Der Aufnahmebereich 49 weist darüber hinaus Federn 55 auf, die in entsprechende Nuten 54 zum drehsicheren Befestigen des Pulverbehälters eingreifen.

Wird der Pulverbehälter in den Aufnahmebereich 49 eingesetzt, so dient - wie in Figur 6 gezeigt - bevorzugt ein Klemmring 38, der im unteren Bereich des Gasanschlusses 56 angeordnet ist, zum Eingriff in eine nutförmige Vertiefung an der Verschlusskappe 31, um dort den Pulverbehälter 2 sicher zu arretieren. Des Weiteren weist das erfindungsgemäße Pulverstrahlgerät 1 einen Stromanschluss 58 sowie einen Fußschalter 50 auf, der am unteren Bereich anschließbar ist. Am hinteren Bereich des Pulverstrahlgeräts 1 befindet sich bevorzugt ein Wassereinlass 51 und ein Gaseinlass 52, wie beispielsweise ein Druckluftanschluss.

Mittels des Fußschalters 50 können - ebenso wie über das Bedienfeld 7 - einzelne Pulverbehälter 2 ausgewählt sowie die Stärke des Pulver-Gas-Gemisches bzw. die Stärke des Wasserstrahls eingestellt werden. Der Fußschalter 50 dient insbesondere zum komfortablen Bedienen des Pulverstrahlgeräts 1 während der Zahnbehandlung. Der Deckel 8 des Pulverbehälters 2 kann - ebenso wie das Gehäuse 11 - transparent ausgestaltet sein, um problemlos den Füllstand im Pulverbehälter prüfen zu können. Auch lassen sich dabei bei laufendem Gerät Störungen durch Augenschein leicht erkennen.

## Patentansprüche

1. Pulverbehälter (2) für ein Pulverstrahlgerät (1), mit einer Pulveraufnahme (14) und einer Wirbelkammer (24), in der unter Druck stehendes und über mindestens einen Gaseintritt (17) eintretendes Gas Pulver verwirbelt und als Pulver-Gas-Gemisch über eine Auslassöffnung (16) mindestens eines Gemischaustritts (15) des Pulverbehälters (2) abführt, wobei
der Pulverbehälter (2) einen Kupplungsbereich (48) zum dichtenden Verbinden des sich im Kupplungsbereich (48) angeordneten Gaseintritts (17) und des sich im Kupplungsbereich (48) angeordneten Gemischaustritts (15) mit entsprechenden Anschlüssen (56, 57) eines Pulverstrahlgeräts (1) aufweist,
**dadurch gekennzeichnet,**
**dass** der Kupplungsbereich (48) des Pulverbehälters (2) Kodiermittel (22, 35) aufweist, welche dass die Kodiermittel (22, 35) mit elektrischen Kontakten (37) eines Aufnahmebereichs (49) des Pulverstrahlgeräts (1) derart zusammenwirken können, dass das Pulverstrahlgerät (1) Informationen über die Art des Pulverbehälters (2) erhält.

2. Pulverbehälter nach Anspruch 1,
**dadurch gekennzeichnet,**
**dass** die Kodiermittel in Form von Zapfen (22) und/oder Öffnungen (35) ausgebildet sind.

3. Pulverbehälter nach einem der vorhergehenden Ansprüche,
**dadurch gekennzeichnet,**
**dass** die Pulveraufnahme (14) in einem Gehäuse (11) angeordnet und mit einem Deckel (8) abgeschlossen ist, der sich an der dem Kupplungsbereich (48), gegenüberliegenden Seite des Pulverbehälters (2) befindet und so unterschiedliche Düsen-/Leitungshalterungen (23, 30) und unterschiedliche Einsätze aufnehmen kann, so dass abhängig von dem verwendeten Pulver unterschiedliche Düsen- und Verwirbelungsanordnungen realisierbar sind.

4. Pulverbehälter nach Anspruch 3,
**dadurch gekennzeichnet,**
**dass** die Pulveraufnahme (14) eine eine Düse (18) haltende Düsenhalterung (23) und einen Einsatz (20) mit einer Einblasöffnung (26) aufweist, so dass das unter Druck stehende Gas über den Gaseintritt (17) der Düse (18) zuführbar ist, die in der Einblasöffnung (26) des Einsatzes (20) im wesentlichen vertikal nach oben gerichtet das Gas in eine zylindrisch oder konisch zulaufende Mischkammer (25) des Einsatzes (20) einströmen lässt, so dass Pulver, das sich in der Pulveraufnahme (14) um den Einsatz (20) herum befindet und zwischen der Düse und der Wand der Mischkammer (25) an der Einblasöffnung (26) ansteht, durch das Gas vertikal nach oben mitgerissen, in der Mischkammer (25) mit dem Gas vermischt und in der Wirbelkammer (24) verwirbelt werden kann.

5. Pulverbehälter nach Anspruch 3,
**dadurch gekennzeichnet,**
**dass** die Pulveraufnahme (14) eine eine Gasleitung (28) haltende Leitungshaltering (30) aufweist, so dass das unter Druck stehende Gas über den Gaseintritt (17) der sich am Ende der Gasleitung (28) angeordneten Düse (18) derart zuführbar ist, dass das aus der Düse austretende Gas das Pulver in der Wirbelkammer (24) verwirbelt, wobei die Düse (18) oberhalb eines Pulverspiegels eines sich in der Pulveraufnahme (14) befindlichen Pulvers auf das Pulver ausgerichtet ist.

6. Pulverbehälter nach Anspruch 4 oder 5,
**dadurch gekennzeichnet,**
**dass** die Pulveraufnahme (14) in dem aufrecht stehenden, zylinderförmigen Gehäuse (11) auswechselbar angeordnet ist, wobei sich die unterschiedlichen Düsen-/Leitungshalterungen (23, 30) am unteren und der Deckel (8) am oberen Ende des Gehäuses (11) befinden, und dass der Deckel (8) und/oder die Pulveraufnahme (14) mittels eines Verschlussteils (10) dichtend im Gehäuse (11) festlegbar sind.

7. Pulverbehälter nach Anspruch 4 oder 5,
**dadurch gekennzeichnet,**
**dass** die unterschiedlichen Düsen-/Leitungshalterungen (23, 30) mittels einer abnehmbaren Verschlusskappe (31) an einem Bodenteil (60) des Gehäuses (11) auswechselbar befestigt sind.

8. Pulverbehälter nach einem der Ansprüche 3-7,
**dadurch gekennzeichnet,**
**dass** die Auslassöffnung (16) am oberen Ende des Gehäuses (11) im Bereich des Deckels (8) angeordnet ist, und dass der Deckel (8) Führungsformungen (9) aufweist, die das Pulver-Gas-Gemisch ablenken.

9. Pulverbehälter nach einem der Ansprüche 3-8,
**dadurch gekennzeichnet,**
**dass** das Gehäuse (11) zumindest teilweise transparent ist.

10. Pulverbehälter nach einem der vorhergehenden Ansprüche,
**dadurch gekennzeichnet,**
**dass** in den Pulverbehälter (2) ein Einsatz (20) einsetzbar ist, der Segmente (45) aufweist, die unterschiedlich große Regulieröffnungen (43) bilden, die wahlweise vor der Auslassöffnung (16) angeordnet werden können, um so den Ausstoß an Pulver-Gas-Gemisch zu regulieren.

11. Pulverbehälter nach Anspruch 10,
**dadurch gekennzeichnet,**
**dass** die Segmente (45) Kreisabschnitte bilden und mittels Stützstegen (44) an der zylindrisch oder konisch zulaufenden Mischkammer (25) des Einratzes (20) befestigt sind.

12. Pulverbehälter nach Anspruch 11,
**dadurch gekennzeichnet,**
**dass** die Stützstege (44) in Drehbegrenzungen (33) der Pulveraufnahme (14) eingreifen, so dass eine vorbestimmbare Regulieröffnung (43) wahlweise vor der Auslassöffnung (16) angeordnet wird.

13. Kombination aus einem Pulverstrahlgerät (1) und einem Pulverbehälter (2) nach einem der vorhergehenden Ansprüche, zur Vermischung eines Pulvers mit einem unter Druck stehenden Gas, wobei das Pulverstrahlgerät (1) Zuführungen (52, 56) für das unter Druck stehende Gas und eine Ableitung (5), die mit einer Austrittsdüse (6) verbunden ist, an der ein Pulver-Gas-Gemisch und ggf. Wasser unter Druck austritt, aufweist und wobei
das Pulverstrahlgerät (1) mindestens einen Aufnahmebereich (49) mit mindestens einem Gemischanschluss (57) und mindestens einem Gasanschluss (56) zum auswechselbaren Verbinden des Pulverbehälters (2) mit dem Pulverstrahlgerät (1) aufweist,
**dadurch gekennzeichnet,**
**dass** die Kodiermittel (22, 35) des Pulverbehälters (2) mit elektrischen Kontakten (37) des Aufnahmebereichs (49) derart zusammenwirken, dass das Pulverstrahlgerät (1) informationen über die Art des Pulverbehälters (2) erhält.

## Claims

1. A powder container (2) for a powder jet device (1) comprising a powder receptacle (14) and a turbulence chamber (24) in which powder is fluidised by pressurized gas entering through at least one gas inlet (17) and is discharged as a powder-gas mixture through an outlet opening (16) of at least one mixture outlet (15) of the powder container (2), wherein
the powder container (2) comprises a coupling area (48) for the tight connection of said gas inlet (17) arranged in the coupling area (48) and said mixture outlet (15) arranged in the coupling area (48) with appropriate connections (56, 57) of a powder jet device (1)
**characterised in that**
the coupling area (48) of the powder container (2) comprises coding means (22, 35) which are able to cooperate with electrical contacts (37) of a receiving area (49) of the powder jet device (1) such that the powder jet device (1) receives information concerning the type of the powder container (2).

2. The powder container according to claim 1,
**characterised in that**
the coding means are formed in the form of pins (22) and/or openings (35).

3. The powder container according to one of the preceding claims,
**characterised in that**
the powder receptacle (14) is arranged in a housing (11) and is sealed with a lid (8) which is located at the opposite side of the coupling area (48) of the powder container (2) thereby being able to accommodate different jet/conduit holders (23, 30) and different inserts so that different jet and fluidisation arrangements are able to be realised depending on the powder which is being used.

4. The powder container according to claim 3,
**characterised in that**
the powder receptacle (14) comprises a jet holder (23) holding a jet (18), and an insert (20) having an inflow opening (26) so that the pressurised gas is able to be supplied to the jet (18) through gas inlet (17), the jet (18), in the inflow opening (26) of insert (20), allowing gas to flow substantially vertically upwards into a cylindrical or conically tapered mixing chamber (25) of insert (20) so that powder which is located in the powder receptacle (14) and surrounding insert (20) and which is present between the jet and the wall of mixing chamber (25) at the inflow opening (26), may be entrained vertically upwardly by the gas and blended into the gas in the mixing chamber (25) and may be fluidised in turbulence chamber (24).

5. The powder container according to claim 3,
**characterised in that**
the powder receptacle (14) comprises a conduit holder (30) holding a gas conduit (28) so that pressurised gas is able to be supplied through gas inlet (17) which is arranged on the jet (18) located at the end of the gas conduit (28) such that gas exiting the jet will fluidise the powder in the turbulence chamber (24), the jet (18) being directed to the powder which is present above a powder level of a powder which is located in the powder receptacle (14).

6. The powder container according to claim 4 or 5,
**characterised in that**
the powder receptacle (14) is removably arranged in the cylindrical housing (11) standing upright, wherein said different jet/conduit holders (23, 30) are located on the lower end of the housing (11) and the lid (8) is located at the upper end of the housing (11), and **in that** the lid (8) and/or the powder receptacle (14) may sealingly be defined in housing (11) by way of a sealing part (10).

7. The powder container according to claim 4 or 5,
**characterised in that**
the different jet/conduit holders (23, 30) are removably mounted to a bottom part (60) of housing (11) by way of a removable sealing cap (31).

8. The powder container according to one of the claims 3-7,
**characterised in that**
the outlet opening (16) is arranged at the upper end of the housing (11 ) in the range of the lid (8) and **in that** the lid (8) has guiding formations (9) deflecting the gas-powder mixture.

9. The powder container according to claim 3-8,
**characterised in that**
the housing (11 ) is at least partially transparent.

10. The powder container according to one of the preceding claims,
**characterised in that**
an insert (20) having segments (45) forming differently sized regulating openings (43) which may optionally be arranged in front of outlet opening (16), thereby regulating the output of the gas-powder mixture, is insertable into the powder container (2).

11. The powder container according to claim 10,
**characterised in that**
the segments (45) form segments of a circle and are mounted to the cylindrical or conically tapered mixing chamber (25) of insert (20) by way of supporting elements (44).

12. The powder container according to claim 11,
**characterised in that**
said supporting elements (44) engage into rotational stoppers (33) of the powder receptacle (14) so that a predetermined regulation opening (43) is optionally being arranged in front of outlet opening (16).

13. A combination comprising a powder jet device (1) and a powder container (2) according to one of the preceding claims for blending a powder into a pressurised gas, wherein the powder jet device (1) comprises feed lines (52, 56) for the pressurised gas, and a discharge line (5) which is connected to an exit jet (6) for the pressurized discharge of a powder-gas mixture and optionally water, and wherein
the powder jet device (1) comprises at least one receiving area (49) having at least one mixture connection (57) and at least one gas connection (56) for removably connecting the powder container (2) to the powder jet device (1),
**characterised in that**
the coding means (22, 35) of the powder container (2) cooperate with electrical contacts (37) of the receiving area (49) so that the powder jet device (1) receives information concerning the type of said powder container (2).

## Revendications

1. Conteneur de poudre (2) pour un pulvérisateur de poudre (1), comprenant un logement de poudre (14) et une chambre de tourbillonnement (24) dans laquelle un gaz sous pression qui pénètre via au moins une entrée de gaz (17) fait tourbillonner la poudre et la fait sortir sous la forme d'un mélange poudre-gaz via une ouverture de sortie (16) d'au moins une sortie de mélange (15) du conteneur de poudre (2),
dans lequel le conteneur de poudre (2) comprend une zone d'accouplement (48) pour une liaison étanche de l'entrée de gaz (17) agencée dans la zone d'accouplement (48) et de la sortie de mélange (15) agencée dans la zone d'accouplement (48) avec des raccords correspondants (56, 57) d'un pulvérisateur de poudre (1),
**caractérisé en ce que**
la zone d'accouplement (48) du conteneur de poudre (2) comprend des moyens de codage (22, 35), lesquels sont capables de coopérer avec des contacts électriques (37) d'une zone de réception (49) du pulvérisateur de poudre (1) de telle manière que le pulvérisateur de poudre (1) reçoit des informations concernant le type de conteneur de poudre (2).

2. Conteneur de poudre selon la revendication 1,
**caractérisé en ce que** les moyens de codage sont réalisés sous la forme de tétons (22) et/ou d'ouvertures (35).

3. Conteneur de poudre selon l'une des revendications précédentes, **caractérisé en ce que** le logement de poudre (14) est agencé dans un boîtier (11) et est refermé avec un couvercle (8) qui se trouve du côté du conteneur de poudre (2) opposé à la zone d'accouplement (48), et est capable de recevoir différentes montures de conduites et/ou de buses (23, 30) et différents inserts de telle façon que, en fonction de la poudre utilisée, il est possible de réaliser différents agencements de buses et de tourbillonnements.

4. Conteneur de poudre selon la revendication 3,
**caractérisé en ce que**
le logement de poudre (14) comprend une monture de buse (23) qui porte une buse (18) et un insert (20) avec une ouverture de soufflage (26), de sorte que le gaz sous pression est susceptible d'être alimenté via l'entrée de gaz (17) de la buse (18), celle-ci étant dirigée essentiellement verticalement vers le haut dans l'ouverture de soufflage (26) de l'insert (20) et laisse le gaz entrer dans une chambre de mélange cylindrique ou conique convergente (25) de l'insert (20), de telle façon que la poudre qui se trouve dans le logement de poudre (14) tout autour de l'insert (20) et se présente entre la buse et la paroi de la chambre de mélange (25) au niveau de l'ouverture de soufflage (26) peut être entraînée verticalement vers le haut par le gaz, mélangée avec le gaz dans la chambre de mélange (25) et mise en tourbillonnement dans la chambre de tourbillonnement (24).

5. Conteneur de poudre selon la revendication 3,
**caractérisé en ce que** le logement de poudre (14) comprend une monture de conduite (30) qui porte une conduite de gaz (28), de sorte que le gaz sous pression peut être admis via l'entrée de gaz (17) de la buse (18) agencée à l'extrémité de la conduite de gaz (28) de telle façon que le gaz sortant de la buse met la poudre en tourbillonnement dans la chambre de tourbillonnement (24), la buse (18) étant orientée vers la poudre au-dessus du niveau d'une poudre qui se trouve dans le logement de poudre (14).

6. Conteneur de poudre selon la revendication 4 ou 5,
**caractérisé en ce que** le logement de poudre (14) est agencé de façon interchangeable dans le boîtier cylindrique (11) dressé verticalement, et les différentes montures de buses et/ou de conduites (23, 30) se trouvent à l'extrémité inférieure et le couvercle (8) se trouve à l'extrémité supérieure du boîtier (11), et **en ce que** le couvercle (8) et/ou le logement de poudre (14) sont susceptibles d'être immobilisés de façon étanche dans le boîtier (11) au moyen d'une pièce d'obturation (10).

7. Conteneur de poudre selon la revendication 4 ou 5,
**caractérisé en ce que** les différentes montures de buses et/ou de conduites (23, 30) sont fixées de façon interchangeable sur une partie de fond (60) du boîtier (11) au moyen d'un capuchon obturateur amovible (32).

8. Conteneur de poudre selon l'une des revendications 3 à 7,
**caractérisé en ce que** l'ouverture de sortie (16) est agencée à l'extrémité supérieure du boîtier (11) dans la zone du couvercle (8), et **en ce que** le couvercle (8) présente des conformations de guidage (9) qui dévient le mélange poudre-gaz.

9. Conteneur de poudre selon l'une des revendications 3 à 8,
**caractérisé en ce que** le boîtier (11) est au moins partiellement transparent.

10. Conteneur de poudre selon l'une des revendications précédentes, **caractérisé en ce qu'**un insert (20) est susceptible d'être mis en place dans le conteneur de poudre (2), cet insert comprenant des segments (45) qui forment des ouvertures de régulation (43) de grandeurs différentes, qui peuvent être agencées sélectivement devant l'ouverture de sortie (16) afin de réguler ainsi le débit sortant de mélange poudre-gaz.

11. Conteneur de poudre selon la revendication 10,
**caractérisé en ce que** les segments (45) forment des tronçons circulaires et sont fixés au moyen de barrettes de soutien (44) sur la chambre de mélange (25), cylindrique ou conique convergente, de l'insert (20).

12. Conteneur de poudre selon la revendication 11,
**caractérisé en ce que** les barrettes de soutien (44) s'engagent dans des limitations de rotation (33) du logement de poudre (14), de sorte qu'une ouverture de régulation prédéterminée (43) est agencée sélectivement devant l'ouverture de sortie.

13. Combinaison constituée d'un pulvérisateur de poudre (1) et d'un conteneur de poudre (2) selon l'une des revendications précédentes, pour le mélange d'une poudre avec un gaz sous pression, dans laquelle le pulvérisateur de poudre (1) comprend des conduites d'amenée (52, 56) pour le gaz sous pression et une conduite de sortie (5), laquelle est reliée à une buse de sortie (6) au niveau de laquelle sort un mélange poudre-gaz avec le cas échéant de l'eau sous pression, et dans laquelle
le pulvérisateur de poudre (1) comprend au moins une zone de réception (49) avec au moins un raccord de mélange (57) et au moins un raccord de gaz (56) pour relier de façon interchangeable le conteneur de poudre (2) au pulvérisateur de poudre (1),
**caractérisée en ce que** les moyens de codage (22, 35) du conteneur de poudre (2) coopèrent avec des contacts électriques (37) de la zone de réception (49) de telle façon que le pulvérisateur de poudre (1) reçoit des informations concernant le type de conteneur de poudre (2).
